# EUROPÄISCHE PATENTSCHRIFT

(11) **EP 0 825 700 B1**
(45) Veröffentlichungstag und Bekanntmachung des Hinweises auf die Patenterteilung: **10.12.2003**
(21) Anmeldenummer: 97114025.6
(22) Anmeldetag: 14.08.1997
(51) Int. Cl.: H02J 7/16, H02P 9/10

(54) **Spannungsversorgungssystem mit erhöhter Ausgangsleistung**
Voltage supply system with increased power output
Système d'alimentation en tension avec augmentation de la puissance de sortie

(30) Priorität: 23.08.1996 DE 19634096
(43) Veröffentlichungstag der Anmeldung: 25.02.1998
(73) Patentinhaber: ROBERT BOSCH GMBH, 70442 Stuttgart (DE)
(72) Erfinder: Frey, Wunibald, 71701 Schwieberdingen (DE); Ragaly, Istvan, 71701 Schwieberdingen (DE); Koelle, Gerhard, 75446 Wiernsheim (DE); Geiger, Albert, 71735 Eberdingen (DE); Novak, Wenzel, 74321 Bietigheim-Bissingen (DE)

(56) Entgegenhaltungen:
- DE-A- 2 920 101
- DE-A- 3 142 878
- FR-A- 2 605 815
- PATENT ABSTRACTS OF JAPAN vol. 018, no. 515 (E-1611), 28.September 1994 & JP 06 178459 A (NIPPONDENSO CO LTD), 24.Juni 1994,
- PATENT ABSTRACTS OF JAPAN vol. 013, no. 474 (E-836), 26.Oktober 1989 & JP 01 186134 A (NIPPON DENSO CO LTD;OTHERS: 01), 25.Juli 1989,

## Beschreibung

Die Erfindung betrifft ein Spannungsversorgungssystem mit erhöhter Ausgangsleistung nach der Gattung des Hauptanspruchs.

### Stand der Technik

In modernen Kraftfahrzeugen mit einer Vielzahl von elektrischen Verbrauchern, die teilweise sehr hohe Leistungen aufnehmen, besteht insbesonders bei Betrieb mit niedriger Motordrehzahl, beispielsweise bei längerem Motorleerlauf die Gefahr, daß die vom Generator zur Versorgung der Verbraucher gelieferte Energie nicht ausreicht, so daß die Gefahr besteht, daß diese Verbraucher aus der Batterie gespeist werden und die Batterie entladen. Es werden daher verschieden Maßnahmen vorgeschlagen, auch bei niedriger Motordrehzahl den hohen Strombedarf der stark leistungsaufnehmenden Kurzzeitverbraucher sicherzustellen. Es wird deshalb beispielsweise bei einer Vorrichtung oder einem Verfahren zur Regelung eines Generators wie es aus der DE-OS 41 02 335 bekannt ist, vorgeschlagen, den Erregerstrom zeitweilig gegenüber dem Nennerregerstrom zu erhöhen, beispielsweise durch Erhöhung der an der Erregerwicklung anliegenden Spannung. Der Generator wird dann in einem übererregten Zustand betrieben. Zur Versorgung eines Hochleistungsverbrauchers, beispielsweise einer Frontscheibenheizung kann der Generator zeitweilig mit freilaufender Spannung betrieben werden, die dann ausschließlich diesem Verbraucher zur Verfügung gestellt wird.

DE 3 142 878 zeigt ein Spannungsversorgungssystem mit einem Drehstromgenerator, wobei eine erhöhte Erregerspannung mit zusätzlichen Wicklungen erzeugt wird.

### Vorteile der Erfindung

Das erfindungsgemäße Spannungsversorgungssystem mit erhöhter Ausgangsleistung mit den Merkmalen des Anspruchs 1 hat den Vorteil, daß bei einfachem konstruktivem Aufwand kurzzeitig eine besonders hohe Leistungsabgabe zu erzielen ist, ohne Erhöhung der Bordnetzspannung und ohne Abtrennung des übrigen Bordnetzes, wobei die dann erforderlichen Regelmaßnahmen vom Spannungsregler durchgeführt werden. Erzielt wird dieser Vorteil, indem die Erhöhung der an der Erregerwicklung anliegenden Spannung mit Hilfe zusätzlicher Generatorwicklungen, die mit jeweils einer Phase des Generators in Verbindung stehen und über Dioden mit dem Spannungsregler verbunden sind, erfolgt.

Weitere Vorteile der Erfindung werden mit Hilfe der in den Unteransprüchen angegebenen Merkmale erzielt. Dabei wird eine besonders vorteilhafte Spannungsregelung erhalten, indem ein Regler mit zwei Endstufen die jeweils als High-Side-Schalter ausgestaltet sind, eingesetzt wird und diese Endstufen abhängig von externen Anforderungen geschaltet werden. Die freilaufende Spannung an den Zusatzwicklungsenden wird bei gesperrtem Transistor des Spannungsreglers in vorteilhafter Weise mit Hilfe eines Widerstandes oder einer Zenerdiode bedämpft.

Vorteilhafterweise werden bei beiden Ausführungsbeispielen die Reglerendstufen so angesteuert, daß im Normalfall der zweite Transistor leitet und der erste als Reglerendstufe getaktet wird, während bei externer Anforderung der zweite Transistor sperrt. Die Ausgangsspannung des Generators läßt sich in jedem Fall in vorteilhafter Weise exakt auf Bordnetzniveau regeln.

### Zeichnung

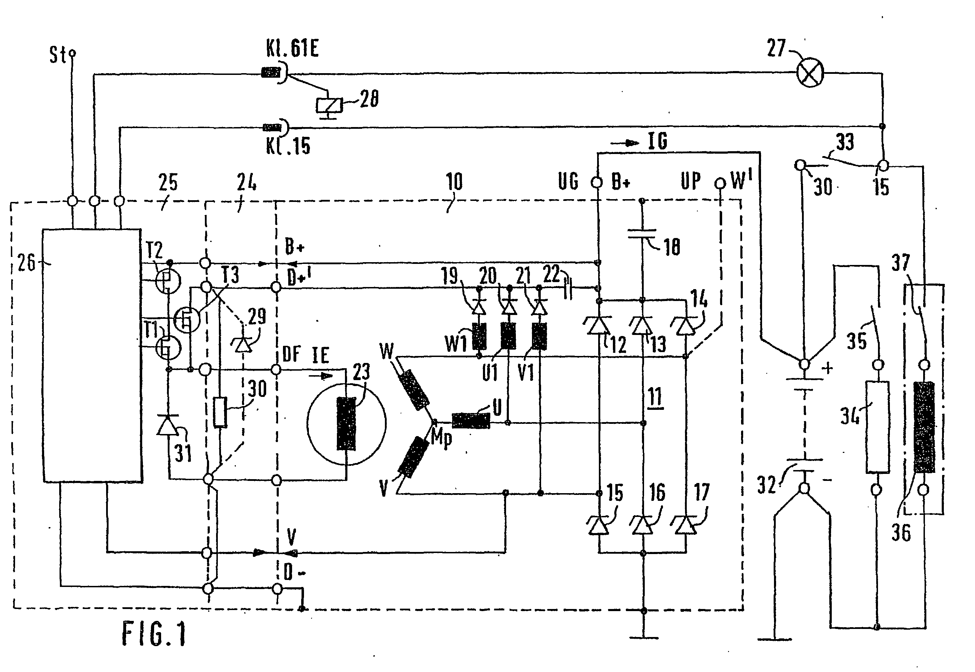

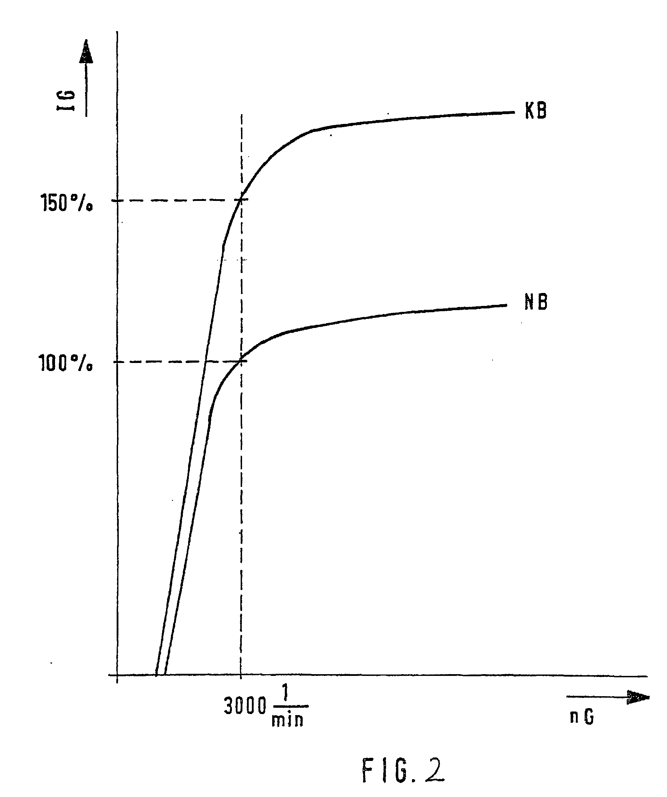

Ein Ausführungsbeispiel der Erfindung ist in Figur 1 der Zeichnung dargestellt und werden in der nachfolgenden Beschreibung näher erläutert. Figur 2 zeigt einen Zusammenhang zwischen Generatorstrom und Generatordrehzahl für zwei verschiedene Betriebsweisen.

### Zeichnung

In Figur 1 ist ein Ausführungsbeispiel der Erfindung dargestellt, wobei lediglich die für das Verständnis der Erfindung erforderlichen Bestandteile eines Fahrzeugbordnetzes aufgezeigt werden. Im einzelnen ist mit 10 der Generator bezeichnet, der die Ständerwicklungen U, V, W aufweist, die einerseits an den gemeinsamen Mittelpunkt Mp angeschlossen sind und andererseits über eine Gleichrichterbrücke 11, die die gesteuerten Gleichrichter 12, 13, 14, 15, 16, 17 umfaßt, mit dem Generatoranschluß B+ verbunden ist, an dem die Ausgangsspannung des Generators UG entsteht und der Generatorstrom IG entnommen wird. Zwischen der Gleichrichterbrücke 11 und dem Gehäuse des Generators liegt ein Kondensator 18. Von der Wicklung W führt eine Verbindung zum Anschluß W', an dem eine Phasenspannung UP abgreifbar ist.

Neben den bereits erwähnten Bauteilen umfaßt der Generator 10 drei zusätzliche Wicklungen U1, V1, W1, die jeweils mit den Wicklungen U, V, W verbunden sind und über eine Hilfsdiodenbrücke mit den Dioden 19, 20, 21 auf den Anschluß D+' führen. Zwischen den Kathoden der Dioden 19, 20, 21 und den Kathoden der gesteuerten Gleichrichter 12, 13, 14 liegt ein Kondensator 22.

Die Erregerwicklung des Generators 10 ist mit 23 bezeichnet, sie führt über den Anschluß DF des Bürstenhalters 24 auf entsprechende Anschlüsse des Spannungsreglers 25. Neben den Anschlüssen B+ und DF zwischen dem Generator 10 und dem Bürstenhalter 24 ist noch ein Anschluß D+' vorhanden, über den der von den zusätzlichen Wicklungen U1, V1, W1 gelieferte Strom zum Spannungsregler 25 geführt wird. Weitere Anschlüsse sind mit V und D- bezeichnet.

Der Spannungsregler umfaßt ein Steuerteil 26, dem das Steuersignal St zugeführt wird. Weitere Anschlüsse sind mit Kl.15 und Kl.61E bezeichnet. Kl.15 führt über einen entsprechenden Anschluß des Bordnetzes, an dem die geschaltete Plusspannung (auf die Batterie bezogen) abgreifbar ist. Klemme Kl.61E stellt den Anschluß zur Ladekontrollampe 27 dar und steuert ein Relais 28 an. Leistungsseitig umfaßt der Spannungsregler 25 drei Transistoren T1, T2, T3, die vom Steuerteil 26 des Spannungsreglers 25 angesteuert werden und je nach Steuerzustand eine Verbindung zwischen B+ und DF der Erregerwicklung 23 oder D+' und DF gewährleisten. Zusätzlich ist noch eine Zenerdiode 29 oder ein Widerstand 30 sowie eine Freilaufdiode 31 vorhanden.

Vom Bordnetz ist die Batterie 32 aufgezeigt, die zwischen der Klemme B+ des Generators und Masse liegt und durch den Generatorstrom IG geladen wird. Plusseitig führt die Batterie zur Klemme Kl.30 und über den Schalter 33 zur Klemme Kl.15. Direkt an + der Batterie 32 ist ein Verbraucher 34 über einen Schalter 35 anschließbar, mit Klemme Kl.15, an der die geschaltete Plusspannung (nach der Batterie) liegt, kann ein Verbraucher 36, z. B. der Starter über den Schalter 37 zugeschaltet werden. Mit der in der Figur 1 dargestellten Schaltungsanordnung ist ein erstes Ausführungsbeispiel des erfindungsgemäßen Spannungsversorgungssystems realisiert.

Die Funktionsweise der Ausführungsform nach Figur 1 läßt sich wie folgt erläutern: Bei Zuschaltung eines elektrischen Verbrauchers mit hoher Leistungsaufnahme, z. B. Verbraucher 34 wird der Generator 10 während des kurzzeitigen erhöhten Leistungsbedarfs geboostert, das heißt die Durchflutung des Erregerfeldes wird deutlich, beispielsweise um einen Faktor 2 bis 3 erhöht. Erfindungsgemäß geschieht die Erhöhung der Durchflutung des Erregerfeldes dadurch, daß über die zusätzlichen Wicklungen U1, V1, W1 im Drehstromgenerator Spannungen erzeugt werden, deren Höhe über das für den normalen Bordnetzbetrieb erforderliche Spannungsniveau hinausgehen. Die Enden der zusätzlichen Wicklungen U1, V1, W1 sind über die Hilfsdioden 19, 20, 21 miteinander verbunden, da die Kathoden dieser Hilfsdioden über den Anschluß D+' zum Regler geführt werden, kann gegebenenfalls ein in den zusätzlichen Wicklungen U1, V1, W1 induzierter Strom zum Spannungsregler 25 fließen.

Der Feldstrom bzw. Erregerstrom IE wird mit Hilfe des Spannungsreglers 25, über die beispielsweise als High-Side-Schalter ausgeführten Endstufen geregelt. Dieser High-Side-Schalter weist eine doppelte Endstufe mit den Transistoren T1 bzw. T3 auf, die vorzugsweise in MOS-Technologie aufgebaut sind.

Im Falle des Bordnetzbetriebes arbeitet die Endstufe mit dem Transistors T1 als Schalter zwischen den Klemmen B+ und DF. Durch Taktung des Erregerstromes IE nach dem Prinzip eines Zweipunktreglers wird die Bordnetzspannung auf die optimale Höhe geregelt. Der Transistor T2, der entgegengeschaltet ist, dient als Rückstromschalter und verhindert damit einen Stromfluß über die parasitäre Diode im MOS-Prozeß.

Werden Endstufentransistoren ohne eine solche parasitäre Diode eingesetzt, kann der Transistor T2 entfallen. Der Transistor T1 wird dann direkt an Klemme B+ angeschlossen. Bei einem Regelniveau von ca. 14 V ergibt sich an einem Gesamtwiderstand im Erregerkreis von beispielsweise 3,5 Ω bei Vollast ein Erregerstrom von ca. 4 A. Damit erreicht der Generator eine Vollastkennlinie wie sie in Figur 3 als Kennlinie NB für Normalbetrieb aufgetragen ist.

Wird ein Kurzzeitverbraucher mit großer Leistungsaufnahme zugeschaltet, wird die Anforderung nach erhöhtem Strombedarf über dem Steuereingang St zugeführt. Es wird dann die Endstufe mit den Transistor T1 und falls vorhanden Transistor T2 gesperrt. Die Endstufe mit dem Transistor T3, die zwischen den Anschlüssen D+' und DF liegt, schaltet ein, damit liegt die um die in den zusätzlichen Wicklungen induzierte Spannung erhöhte Spannung über den Transistor T3 an Klemme DF der Erregerwicklung 23.

Für den Kurzzeitbelastungsfall ergibt sich bei einem gegenüber dem üblichen Erregerstrom dreifach erhöhten Erregerstrom eine Vollastkennlinie gemäß der in Figur 3 als Kennlinie KB aufgetragenen Kennlinie. Die Kennlinie KB, die für den im Kurzzeitbetrieb geboosterten Fall gilt. In diesem Betriebszustand kann der Generator im Kurzzeitbetrieb bei beispielsweise 3000 Umdrehungen/Minute innerhalb von bis zu 30 sek einen um ca. 50 % höheren Strom IG liefern. Bei Drehzahlen über 3000 Umdrehungen/Minute läßt sich ebenfalls ein um bis zu 50 % erhöhter Generatorstrom IG entnehmen.

Der im Ausführungsbeispiel nach Figur 1 im Spannungsregler vorhandene Widerstand 30, der zwischen die Klemmen D+' und D- geschaltet ist, dient der Dämpfung der Ausgangsspannung für die, im unbelasteten Fall, in dem der Transistor T3 gesperrt ist, freilaufenden Wicklungsteile. Diese Funktion wird alternativ auch durch eine Zenerdiode erreicht. Der Kondensator 22, der zwischen den Anschlüssen D+' und B+ liegt, dient als Freilaufkreis für die Wicklungsinduktivität während der Spannungsregelung über die Endstufe mit dem Transistor T3.

Mit dem beanspruchten Spannungsversorgungssystem mit erhöhter Ausgangsleistung läßt sich der Generator im kurzzeitigen Boosterbetrieb betreiben, wobei die Erhöhung des Erregerstromes durch eine zusätzliche Wicklung mit nachgeschalteter Hilfsdiodenhalbbrücke erreicht wird, wobei zusätzlich ein Regler mit zwei Endstufen eingesetzt wird, die jeweils als High-Side-Schalter verwendet werden und abhängig von externen Anforderungen vom Regler geschaltet werden. Bei freilaufender Spannung an den Zusatzwicklungsenden, die bei gesperrtem Transistor T2 auftritt, wird diese freilaufende Spannung über einen Widerstand oder eine Zenerdiode gedämpft. Über einen Kondensator ist ein Freilaufkreis für die getaktete Wicklungsinduktivität über Klemme B+ vorhanden.

## Patentansprüche

1. Spannungsversorgungssystem mit erhöhter Ausgangsleistung, mit einem Drehstromgenerator, dessen Ständerwicklungen über erste Gleichrichter (12, 13, 14) an einem Anschluß (B+) die Versorgungsspannung für ein Fahrzeugbordnetz liefern, mit einer Erregerwicklung, durch die der von einem Spannungsregler (25) beeinflußbaren Erregerstrom fließt, wobei die Erregerwicklung während vorgebbaren Zeiten mit einer gegenüber der Versorgungsspannung erhöhten Spannung betreibbar ist, die mit Hilfe von zusätzlichen Wicklungen und zweiten Gleichrichtern (19, 20, 21) erzeugt wird und wobei die Regelung des Generators durch den Spannungsregler (25) auch bei angelegter höherer Spannung so erfolgt, daß die Ausgangsspannung des Generators im wesentlichen auf Bordnetzspannung bleibt, **dadurch gekennzeichnet, daß** die zusätzlichen Wicklungen (U1, V1, W1) in Serie mit den entsprechenden Ständerwicklungen (U, V, W) geschaltet sind und über die Endstufe (T1, T2, T3) des Spannungsreglers (25) mit der Erregerwicklung (23) so verbindbar sind, daß die Ständerwicklungen (U, V, W) entweder über die Gleichrichter (12, 13, 14) direkt oder über die zusätzlichen Wicklungen (U1, V1, W1) und die zweiten Gleichrichter (19, 20, 21) mit der Erregerwicklung (23) in Verbindung stehen und zwischen dem Anschluß (B+) und den Wicklungsenden der zusätzlichen Wicklungen (U1, V1, W1) ein Kondensator (22) liegt, der einen Freilaufkreis für die getaktete Wicklungsinduktivität bildet.

2. Spannungsversorgungssystem nach Anspruch 1, **dadurch gekennzeichnet, daß** der Spannungsregler (25) die Transistoren (T1, T2, T3) umfaßt, die zwischen den jeweiligen Spannungsquellen (B+) (D+) und der Erregerwicklung parallel geschaltet sind und eine doppelte Endstufe bilden, über die entweder die eine (B+) oder andere Spannungsquelle (D+) mit der Erregerwicklung (23) in Verbindung steht.

3. Spannungsversorgungssystem nach Anspruch 2, **dadurch gekennzeichnet, daß** die zwei Endstufen jeweils als High-Side-Schalter ausgeführt sind und bei Anforderung der erhöhten Ausgangsleistung abhängig von der externen Anforderung schalten.

4. Spannungsversorgungssystem nach Anspruch 3, **dadurch gekennzeichnet, daß** die erste Endstufe bei Anforderungen der erhöhten Leistung gesperrt ist und die dann freilaufende Spannung an den Enden der Zusatzwicklungen (U1), (V1), und (W1) mittels eines Widerstandes (30) oder einer Zenerdiode (29), die zwischen den Enden der Zusatzwicklungen (U1), (V1), und (W1) und Masse liegen, gedämpft wird.

5. Spannungsversorgungssystem nach Anspruch 4, **dadurch gekennzeichnet, daß** der Transistor (T3) der zweiten Endstufe im Normalbetrieb sperrt und dann der Transistor (T1) als Regelendstufe getaktet wird und im Fall einer erhöhten Leistungsanforderung der Transistor (T3) leitet, und der Transistor (T1) oder (T2) gesperrt wird.

## Claims

1. Voltage supply system with increased power output, having a three-phase generator whose stator windings feed the supply voltage for an on-board vehicle power system to a connection (B+) via first rectifiers (12, 13, 14), having an field winding through which the field current which can be influenced by a voltage regulator (25) flows, the field winding being capable of being operated during predefinable times with a voltage which is increased in comparison with the supply voltage and which is generated using additional windings and second rectifiers (19, 20, 21) and the generator being controlled by the voltage regulator (25), even when a relatively high voltage is applied, in such a way that the output voltage of the generator remains essentially at the voltage of the on-board vehicle power system, **characterized in that** the additional windings (U1, V1, W1) are connected in series with the respective stator windings (U, V, W) and can be connected to the field winding (23) via the output stage (T1, T2, T3) of the voltage regulator (25) in such a way that the stator windings (U, V, W) are connected to the field winding (23) either directly via the rectifiers (12, 13, 14) or via the additional windings (U1, V1, W1) and the second rectifiers (19, 20, 21), and between the connection (B+) and the ends of the additional windings (U1, V1, W1) there is a capacitor (22) which forms a free-wheeling circuit for the clocked inductance of the winding.

2. Voltage supply system according to Claim 1, **characterized in that** the voltage regulator (25) comprises the transistors (T1, T2, T3) which are connected in parallel between their respective voltage sources (B+) (D+) and the field winding and form a double output stage via which either the one voltage source (B+) or the other voltage source (D+) is connected to the field winding (23).

3. Voltage supply system according to Claim 2, **characterized in that** the two output stages are each embodied as high-side switches, and when the increased output power is requested they switch as a function of the external request.

4. Voltage supply system according to Claim 3, **characterized in that** the first output stage is switched off when there are requests for the increased power, and the voltage which is then free running at the ends of the additional windings (U1), (V1), and (W1) is attenuated by means of a resistor (30) or a Zener diode (29) which is allocated between the ends of the additional windings (U1), (V1) and (W1) and earth.

5. Voltage supply system according to Claim 4, **characterized in that** the transistor (T3) of the second output stage is normally switched off, and the transistor (T1) is then clocked as a control output stage, and if there is an increased power demand the transistor (T3) is switched on and the transistor (T1) or (T2) is switched off.

## Revendications

1. Système d'alimentation en tension fournissant une puissance de sortie augmentée comprenant un alternateur dont les enroulements de stator sont reliés par des premiers redresseurs (12, 13, 14) à une borne (B+) fournissant la tension d'alimentation du réseau embarqué du véhicule,
un enroulement d'excitation traversé par le courant d'excitation influencé par un régulateur de tension (25),
l'enroulement d'excitation pouvant fonctionner pendant des durées prédéterminées avec une tension augmentée par rapport à la tension d'alimentation, et qui est générée à l'aide d'enroulements supplémentaires et des seconds redresseurs (19, 20, 21) et
la régulation du générateur par le régulateur de tension (25) se fait également lorsqu'une tension plus élevée est appliquée,
la tension de sortie du générateur restant essentiellement au niveau de la tension du réseau embarqué,
**caractérisé en ce que**
les enroulements supplémentaires (U1, V1, W1) sont branchés en série avec les enroulements de stator (U, V, W) correspondants et peuvent être reliés par les étages de puissance (T1, T2, T3) du régulateur de tension (25) à l'enroulement d'excitation (23),
les enroulements de stator (U, V, W) étant reliés soit par les redresseurs (12, 13, 14) directement ou par les enroulements supplémentaires (U1, V1, W1) et les seconds redresseurs (19, 20, 21) à l'enroulement d'excitation (23) et
entre la borne de branchement (B+) et les extrémités des enroulements supplémentaires (U1, V1, W1), on a un condensateur (22) qui forme un circuit de roue libre pour l'inductance d'enroulement découpée.

2. Système d'alimentation en tension selon la revendication 1,
**caractérisé en ce que**
le régulateur de tension (25) comprend les transistors (T1, T2, T3) branchés en parallèle entre les sources de tension respectives (B+) (D+) et l'enroulement d'excitation et formant un étage de puissance doublé par lequel soit l'une (B+), soit l'autre (D+) source de tension est reliée à l'enroulement d'excitation (23).

3. Système d'alimentation en tension selon la revendication 2,
**caractérisé en ce que**
les deux étages de puissance sont des interrupteurs de haute tension et, en cas de demande d'une puissance de sortie augmentée, ils sont commutés en fonction de la requête externe.

4. Système d'alimentation en tension selon la revendication 3,
**caractérisé en ce que**
le premier étage de puissance se bloque en cas de demande de puissance augmentée et la tension de roue libre aux extrémités des enroulements supplémentaires (U1), (V1), (W1) est alors amortie par une résistance (30) ou une diode Zener (29) branchée entre les extrémités des enroulements supplémentaires (U1), (V1), (W1) et la masse.

5. Système d'alimentation en tension selon la revendication 4,
**caractérisé en ce que**
le transistor (T3) du second étage de puissance est bloqué en fonctionnement normal et alors le transistor (T1) est découpé comme étage de puissance de régulation et en cas de demande de puissance augmentée, le transistor (T3) devient conducteur et le transistor (T1) ou (T2) est bloqué.
